Europäisches Patentamt

European Patent Office

Office européen des brevets

(19)

(11) **EP 1 406 179 A1**

(12) **EUROPEAN PATENT APPLICATION**
published in accordance with Art. 158(3) EPC

(43) Date of publication:
**07.04.2004 Bulletin 2004/15**

(51) Int Cl.7: **G06F 17/14**

(21) Application number: **02705384.2**

(86) International application number:
**PCT/JP2002/002663**

(22) Date of filing: **20.03.2002**

(87) International publication number:
**WO 2003/009167 (30.01.2003 Gazette 2003/05)**

(84) Designated Contracting States:
**AT BE CH CY DE DK ES FI FR GB GR IE IT LI LU MC NL PT SE TR**

(30) Priority: **11.07.2001 JP 2001210815**

(71) Applicant: **Techno Mathematical CO., LTD.**
**Shinagawa-ku, Tokyo 140-0001 (JP)**

(72) Inventor: **TANAKA, Masafumi,**
**TECHNO MATHEMATICAL CO., LTD.**
**Tokyo 140-0001 (JP)**

(74) Representative: **de Roquemaurel, Bruno**
**Novagraaf Technologies**
**122, rue Edouard Vaillant**
**92593 Levallois Perret Cedex (FR)**

(54) **DCT MATRIX DECOMPOSING METHOD AND DCT DEVICE**

(57) The purpose is the provision of each of a DCT matrix decomposing method and a DCT device, wherein the device decomposes a one-dimensional DCT matrix to make it possible to carrying out a DCT operation only through addition and subtraction. The method is characterized by comprising: a first step of decomposing an N x N one-dimensional DCT matrix into a plurality of sub-matrices and a zero matrix by using the symmetry of a cosine function; a second step of factorizing each of the sub-matrices to make it possible to express each of the sub-matrices by the product of an intermediate matrix and one or more first matrices the elements of which are 1, -1 or 0, wherein the intermediate matrix contains a cosine coefficient as a matrix element; and, a third step of repeating a factorization process of each of the intermediate matrices a desired number of times to make it possible to express each of the intermediate matrices by the product of second matrices the elements of which are 1, -1 or 0.

## FIG. 1

**Description**

TECHNICAL FIELD

The present invention relates to a DCTmatrix decomposing method and a DCT device, andmore particularly to: the DCT matrix decomposing method for performing a DCT operation only through addition and subtraction operations; and, the DCT device for processing an input signal through this DCT matrix decomposing method.

BACKGROUND ART

A DCT (discrete cosine transformation) is known as an image compression technique in which a correlated imaged signal is orthogonally transformed into an uncorrelated signal. With certainty, the use of the image compression technique using the DCT widely spreads through the use of popular "Karaoke" and video games. Particularly, in the Internet, since multimedia in WWW becomes more and more popular, various types of WWW browsers support JPEG, which employs the DCT. Even in DVD, MPEG-2 using the DCT is employed.

In this DCT, for example, an image of a single frame is split into a plurality of blocks each having a size of 8 pixel x 8pixel. Each of the blocks is subjected to a two-dimensional DCT operation so that a compressed image is obtained. In a typical two-dimensional DCT, each row of an input image signal is sequentially subjected to a one-dimensional DCT operation so that intermediate data is obtained. This intermediate data has its rows and columns transposed. The thus transposed intermediate data is then subjected to the same one-dimensional DCT operation.

In the one-dimensional DCT operation of a single block having a size of 8x8 pixels, since eight components of an image signal is multiplied by a DCT matrix having 8 columns and 8 rows, a total number of multiplication operations reaches 64 times. The multiplication operation requires much more time in calculation than that required in addition and subtraction operations. In addition, a multiplier is much larger in scale than an adder and a subtracter. Also in power consumption, the multiplier is worse at high speed calculation in comparison with the adder and the subtracter.

On the other hand, there is a need for a high speed DCT operation in order to reduce a period of operation time required in processing the image signal through the DCT operation. As for an image transmission device, particularly, in a mobile type device, there is a strong need for considerable reduction of its power consumption.

In view of such circumstances, various types of techniques have been proposed for reducing the number of multiplication operations performed in the DCT operation. For example, "Chen algorithm", which is a high-speed type of one-dimensional DCT operation, is employed in practice. This type of the high-speed algorithm reduces the number of multiplication operations by combining ones of the cosine coefficients in the DCT matrix, which ones are identical with each other in absolute value.

However, even in such high-speed algorithm, the multiplication operation is still required so that any further reduction in operation time is not easy in performing the DCT operation. Further, a DCT device for performing this type of algorithm comprises a multiplier, which makes it difficult to reduce the device in circuit scale and in power consumption.

DISCLOSURE OF THE INVENTION

As described above, both the conventional DCT matrix decomposing method and the conventional DCT device are disadvantageous in further reducing both the circuit scale and the power consumption. Consequently, it is an object of the present invention to provide both a DCT matrix decomposing method for decomposing the one-dimensional DCT matrix and a DCT device for performing the method, wherein the DCT operation is performed only through addition and subtraction operations.

In order to accomplish the above object, provided here is a DCT matrix decomposing method of the present invention, the method characterized by comprising: a first step of decomposing an N x N one-dimensional DCT matrix into a plurality of sub-matrices and a zero matrix by using the symmetry of a cosine function; a second step of factorizing each of the sub-matrices to make it possible to express each of the sub-matrices by the product of an intermediate matrix and one or more first matrices the elements of which are 1, -1 or 0 in value, wherein the intermediate matrix contains a cosine coefficient as a matrix element; and, a third step of repeating a factorization process of each of the intermediate matrices a necessary number of times to make it possible to express each of the intermediate matrices by the product of second matrices the elements of which are 1, -1 or 0 in value.

In accordance with the present invention, the one-dimensional DCT matrix is decomposed into a plurality of sub-matrices and a zero matrix. Then, each of the sub-matrices is decomposed into the product of the intermediate matrix and the first matrix, or into the product of the plurality of the first matrices. In addition, the intermediate matrix is decomposed into the product of the plurality of the second matrices. Eventually, the DCT matrix is decomposed into: the sub-matrices expressed by the product of the first matrix and the plurality of the second matrices, or expressed by the product of the plurality of the first matrices; and, the zero matrix. Since the matrix elements of the first and the second matrix are 1, -1 or 0 in value, it is possible for the DCT operation using the DCT matrix of the present invention comprised of the first matrices or of the first matrix and the second matrices to determine in calculation the DCT coefficients only through addition and subtraction operations without performing any multiplication operation. Due to this, it is possible to improve the DCT operation in calculation speed.

In order to accomplish the above object, provided here is a DCT device of the present invention, the device characterized by comprising: a signal input portion for inputting an N point input signal; a signal selection portion for selecting a group of input signal among the N point signals, which group corresponds to one or more of a plurality of first matrices, or to the first matrix and a plurality of second matrices, wherein the first and the second matrices are obtained with respect of each of the sub-matrices defined in claim 1 by performing the first to the third steps defined in claim 1; an addition/subtraction portion for performing addition and subtraction operations for expanding the product of the first matrix and the plurality of the second matrices, or the product of the plurality of the first matrices with respect to the group of the input signals, which group depends on each of the sub-matrices and is selected in the signal section portion; a signal output portion for retrieving, as N point one-dimensional DCT data, an input signal of addition/subtraction operation in the addtion/subtraction portion; a transposition portion for transposing a group of one-dimensional DCT data comprised of the N point one-dimensional DCT data at an N point, wherein the N point one-dimensional DCT data is subsequently supplied from the signal output portion; whereby the group of one-dimensional DCT data is supplied from the transposition portion to the signal input portion with respect to each of the N point one-dimensional data to make it possible to retrieve a DCT coefficient data from the signal output portion, which coefficient data is anNpoint data resulted fromboth selection in the signal section portion and addition/subtraction in the addition/subtraction portion with respect to each of the N point one-dimensional data.

The DCT device of the present invention capable of determining the DCT coefficients in calculation is based on the DCT matrix decomposing method of the present invention defined in claim 1 and does not employ any multiplier. Due to this, it is possible for the DCT device of the present invention to perform at high speed the DCT operation for converting the input signal into the DCT coefficient. In addition, the DCT device of the present invention is reduced in circuit scale and in power consumption.

BRIEF DESCRIPTION OF THE DRAWING

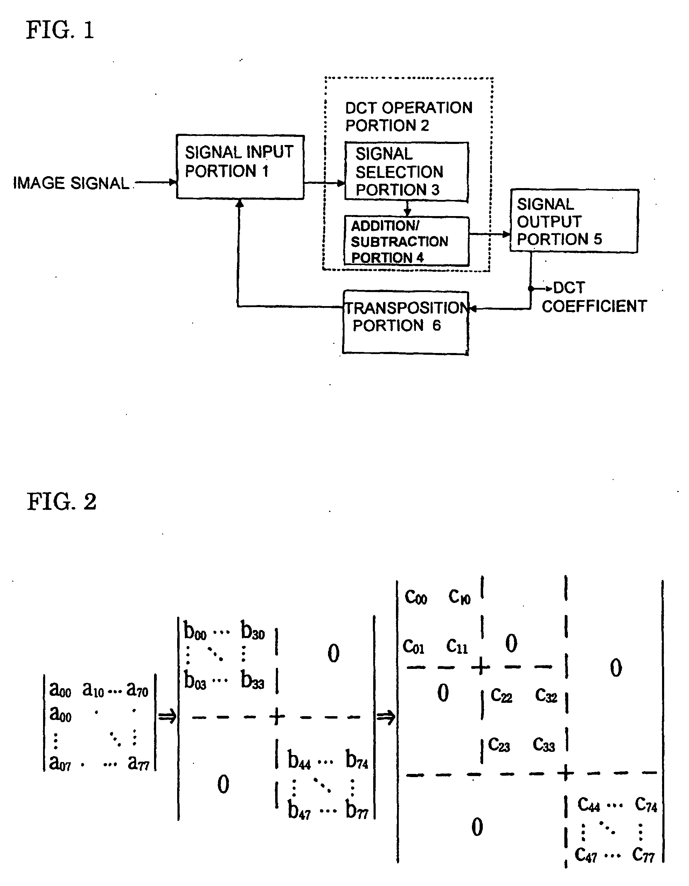

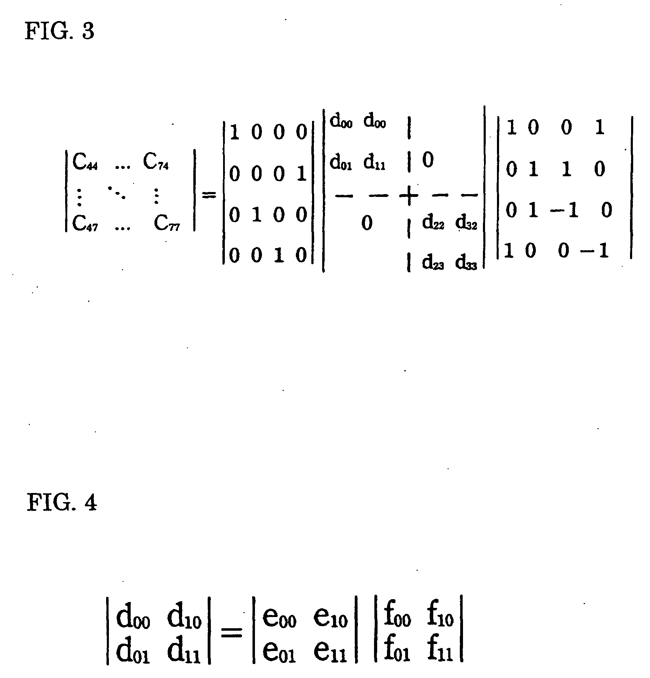

Fig. 1 is a schematic block diagram illustrating the DCT device of the present invention. Fig. 2 is a view illustrating the decomposition of the matrix by using the symmetry of a cosine in the DCT matrix decomposing method of the present invention. Fig. 3 is a view illustrating the decomposition of the matrix through a factorization operation subsequent to the decomposition of the matrix shown in Fig. 2. Fig. 4 is a view illustrating the decomposition of the matrix through the factorization operation.

BEST MODE FOR CARRYING OUT THE INVENTION

With reference to the accompanying drawings, embodiments of the present invention will be described. In a DCT device of the present invention, a two-dimensional DCT operation for converting an image signal into a DCT coefficient, wherein the image signal is split in block unit out of an image of a single frame and each of blocks thus slit out of the frame has a size of 8 pixel x 8 pixel, for example.

As shown in Fig. 1, the DCT device comprises: an input signal portion 1 in which an 8 point image signal is subsequently inputted in a row direction in each of the blocks; a DCT operation portion 2 in which the 8 point image signal having been inputted through the signal input portion 1 is subjected to a one-dimensional DCT operation; a signal output portion 5 for retrieving a piece of 8 point one-dimensional DCT data having been subjected to the one-dimensional DCT operation; and, a transposition portion 6 for transposing and temporality storing therein a group of one-dimensional DCT data comprised of 8 sets of the 8 point one-dimensional DCT data subsequently supplied from this signal output portion 5. Each of these functional portions is adapted to be controlled in operation by a control portion not shown in the drawings.

When the one-dimensional DCT data with respect to the image signal of each of the blocks has its rows and columns transposed and stored in the transposition portion 6, every row in the group of this DCT data is subsequently supplied from the transposition portion 6 to the DCT operation portion 2 through the signal input portion 1. In the DCT operation portion 2, each of the 8 point one-dimensional data is subjected to the one-dimensional DCT operation, and then retrieved as the DCT coefficient from the signal output portion 5. Incidentally, the DCT coefficient thus retrieved from the signal output portion 5 is further subjected to a quantization process in a quantization portion and to an entropy coding process in an entropy coding portion.

As described above, in the DCT device of the present invention, the one-dimensional DCT operation is repeated to perform the two-dimensional DCT operation.

Here, when the DCT coefficient is represented by F(u, v) ; the image signal of each block is represented by f(x,y); weight coefficients are represented by Cu, Cv; and, essential components of the transformation function are represented by

$$Cos[(2x + 1)u\pi/4]$$

$$Cos[(2x + 1)v\pi/4],$$

an equation for an N point two-dimensional DCT operation and for an N point one-dimensional DCT operation is represented as follows:

$$F(u,v) = (4/N^2) C_u\ C_v \sum_{X=0}^{N-1}\sum_{Y=0}^{N-1}\ f(x,y)\cos[(2x\ +\ 1)u\pi/8]\cos[(2x\ +\ 1)v\pi/8]$$

$$F(u) = (2/N) C_u \sum_{X=0}^{N-1}\ f(x)\cos[(2x\ +\ 1)u\pi/8]$$

The present invention is characterized by carrying out the one-dimensional DCT operation only through addition and subtraction. In order to realize such DCT operation, the DCT matrix is decomposed into the product of a plurality of matrices by the method inherent in the present invention.

In the present invention, the symmetry of a cosine function is utilized, so that, as shown in Fig. 2, the 8 point one-dimensional DCT matrix is decomposed into: a pair of sub-matrices each having a size of 4 rows x 4 columns; and, a pair of zero matrices. Then, one of the sub-matrices having the size of 4 rows x 4 columns is further decomposed into: a pair of sub-matrices each having a size of 2 rows x 2 columns; and, a pair of zero matrices. Eventually, the 8 point one-dimensional DCT matrix is decomposed into: a pair of the sub-matrices each having the size of 2 rows x 2 columns; a single sub-matrix having the size of 4 rows x 4 columns; and, four pieces of the zero matrices.

Such decomposition of the 8 point one-dimensional DCT matrix is realized by a high-speed Chen algorithm, for example. In the Chen algorithm, the DCT matrix [AN] for converting the N point input signal [f] into the DCT coefficient [F] performs the decomposition as shown in the following equation, wherein such decomposition is repeatedly performed until the matrix having the size of 2 rows x 2 columns appears after the repeated decomposition of the N point one-dimensional DCT matrix:

$$[AN] = [PN]\begin{bmatrix} A_{N/2} & 0 \\ & \\ 0 & Q_{N/2} \end{bmatrix}[BN]$$

where: [BN] represents a butterfly matrix. Further, in a condition in which

$$\begin{cases} [PN] = [P(x,y)] \\ x,y = 0,\ 1,\ 2,\dots,\ N-1, \end{cases}$$

P(x,y) takes a value of 1 in a condition in which

$$\begin{cases} Y=2X \\ Y=2(x - N/1) + 1. \end{cases}$$

Otherwise, P(x,y) takes a value of zero. On the other hand,
[QN/2] is represented as follows:

$$\begin{cases} [Q_{N/2}] = C_{2K+1} \cos\{(2y + 1)(2k + 1) \; \pi/2N\} \\ y, k = 0, 1, \ldots, N/2-1 \end{cases}$$

Now, in the present invention, three of the sub-matrices described above are decomposed through factorization so as to be represented by the product of the intermediate matrix and the first matrix the elements of which are 1, -1 or zero in value, wherein the intermediate matrix contains the cosine coefficient values as matrix elements. For example, the sub-matrix having a size of 4 rows x 4 columns shown in Fig. 2 is subjected to a factorization operation. As a result, the sub-matrix is converted into the product of a pair of the first matrices and a single intermediate matrix. Among the matrix elements of this intermediate sub-matrix, ones such as doo, d10, d11, d22, d32, d23, d33 are comprised of the cosine coefficient values.

More specifically, when the sub-matrix having the size of 4 rows x 4 columns is represented by an expression A4, the sub-matrix A4 is decomposed through a factorization operation as follows, wherein an expression CP/q represents a cos(p/q) $\pi$:

$$A4 = \begin{vmatrix} C_{1/4} & C_{1/4} & C_{1/4} & C_{1/4} \\ C_{1/8} & C_{3/8} & C_{6/8} & C_{7/8} \\ C_{2/8} & C_{6/8} & C_{6/8} & C_{2/8} \\ C_{3/8} & C_{7/8} & C_{1/8} & C_{5/8} \end{vmatrix}$$

$$= \begin{vmatrix} 1 & 0 & 0 & 0 \\ 0 & 0 & 0 & 1 \\ 0 & 1 & 0 & 0 \\ 0 & 0 & 1 & 0 \end{vmatrix} \begin{vmatrix} C_{1/4} & C_{1/4} & C_{1/4} & C_{1/4} \\ C_{1/4} & C_{3/4} & C_{3/4} & C_{1/4} \\ C_{3/8} & -C_{1/8} & C_{1/8} & -C_{1/8} \\ C_{1/8} & C_{3/8} & -C_{3/8} & -C_{1/8} \end{vmatrix}$$

$$= \begin{vmatrix} 1 & 0 & 0 & 0 \\ 0 & 0 & 0 & 1 \\ 0 & 1 & 0 & 0 \\ 0 & 0 & 1 & 0 \end{vmatrix} \begin{vmatrix} C_{1/4} & C_{1/4} & 0 & 0 \\ C_{1/4} & C_{3/4} & 0 & 0 \\ 0 & 0 & -C_{1/8} & C_{3/8} \\ 0 & 0 & C_{3/8} & C_{1/8} \end{vmatrix} \begin{vmatrix} 1 & 0 & 0 & 1 \\ 0 & 1 & 1 & 0 \\ 0 & 1 & -1 & 0 \\ 0 & 0 & 0 & -1 \end{vmatrix}$$

Further, with respect to each of the intermediate matrices, the factorization operation is repeatedly performed a necessary number of times, so that the intermediate is represented by the product of the second sub-matrices the matrix elements of each of which are 1, -1 or zero in value. For example, one of the sub-matrices forming the intermediate matrices shown in Fig. 3 is subjected to the factorization operation so as to be represented by the product of the second matrices, as shown in Fig. 4. The matrix elements e00, e10, e01, e11, f00, f10, f01, f11 of each of the second matrices take values of 1, -1 or zero.

The DCT device of the present invention performs the DCT operation on the basis of the 8 point one-dimensional DCT matrix which is decomposed as described above. In this connection, as shown in Fig. 1, the DCT operation portion 2 is provided with: the signal selection portion 3 for selecting a group of input signals among the 8 point image signals, wherein the group of the input signals corresponds to the plurality of the first matrices or to the first matrix and the plurality of the second matrices; and, the addition/subtraction portion 4 for performing the addition and the subtraction operations for expanding the product of the plurality of the first matrices or the product of the first matrix and the plurality of the second matrices. The addition/subtraction portion 4 is constructed of a predetermined number of adders, subtracters and registers all of which are not shown in the drawings, wherein the registers temporarily store therein the results of the addition operation and the results of the subtraction operation.

Next, the DCT device having the above construction will be described in operation. The image signal is serially transmitted in frame unit to the DCT device. The image signal is split into a plurality of blocks each having a size of 8 pixels x 8 pixels. The 8-point image signal in a row direction of each of the blocks is supplied to eight pieces of the signal input terminals of the signal input portion of Fig. 1 through the signal input portion 1 shown in Fig. 1, wherein the eight pieces of the signal input terminals are not shown in the drawings. In the signal selection portion 3, among the 8-point image signals, a group of input signals is selected, provided that the group corresponds to the plurality of the first matrices depending on each of the sub-matrices of the 8 point one-dimensional DCT matrix, or corresponds to the first matrix and the plurality of the second matrices. In such a manner as described above, the group of the input signals, which corresponds to each of the sub-matrices, is selected.

The image signal depending on each of the sub-matrices is supplied to an appropriate one of the adders and the subtracters in a first stage of the addition/subtraction portion 4. The adders and the subtracters of the addition/subtraction portion 4 are connected with each other in a plurality of stages in order to expand: the product of the plurality of the first matrices depending on each of the sub-matrices in the 8 point one-dimensional DCT matrix; or, the product of the first matrix and the plurality of the second matrices. Consequently, the results of operations performed in the adders and the subtracters are supplied to the adders and the subtracters in a stage subsequent to the first stage successively through the registers of the addition/subtraction portion 4.

The result of the addition operations and the results of the subtraction operations performed in the adders and the subtracters, respectively, in a final stage of the addition/subtraction portion 4 represents the result of the one-dimensional DCT operation with respect to the 8 point image signals in the first stage of the block, and is supplied to the transposition portion 6 as a component of the 8 point one-dimensional DCT data having been subjected to the DCT operation. In this transposition portion 6, the DCT data component has its rows and its columns transposed and stored therein temporarily.

Then, with respect to the 8-point image signal in the second stage of the block and a stage subsequent to the second stage, the same DCT operation is subsequently performed so that the 8 point one-dimensional data is stored in the transposition portion 6.

Further, in each of the rows, the 8 point one-dimensional data is supplied from the transposition portion 6 to the DCT operation portion 2 through the signal input portion 1. In the DCT operation portion 2, with respect to the components of the one-dimensional data in each of the rows, as is in the 8-point image signal, the one-dimensional DCT operation is performed. After that, the result of this operation is retrieved from the signal output portion 5 as the DCT coefficient. Such DCT coefficient is then subjected to a quantization process and an entropy coding process, and used as a compressed image signal. The image signal in the remaining blocks is also subjected to the two-dimensional DCT operation as is in the above.

As described above, the DCT device of the present invention is essentially constructed of the adders, the subtracters and the registers, which are connected with each other to form a multi-stage structure. Since the DCT device of the present invention is not provided with any multiplier, it is possible for the DCT device of the present invention to perform the two-dimensional DCT operation at high speed to immediately obtain the DCT coefficient and to remarkably reduce the device in circuit scale and in power consumption.

INDUSTRIAL APPLICABILITY

The present invention has the construction and the action as described above. Due to this, in the DCT matrix decomposing method of the present invention, it is possible to perform the DCT operation through addition and subtraction operations of the input signal without performing any multiplication operation. Due to this, it is possible for the method of the present invention to improve the DCT operation of the method in operation speed. Further, in the DCT device of the present invention, it is possible to eliminate the multiplier in performing the DCT operation to enhance the operation speed of the DCT operation. It is also possible to remarkably reduce the DCT device of the present invention in circuit scale and in power consumption thereof.

## Claims

1. A DCT matrix decomposing method **characterized by** comprising: a first step of decomposing an N x N one-dimensional DCT matrix into a plurality of sub-matrices and a zero matrix by using the symmetry of a cosine function; a second step of factorizing each of the sub-matrices to make it possible to express each of the sub-matrices by the product of an intermediate matrix and one or more first matrices the elements of which are 1, -1 or 0 in value, wherein the intermediate matrix contains a cosine coefficient as a matrix element; and, a third step of repeating a factorization process of each of the intermediate matrices a necessary number of times to make it possible to express each of the intermediate matrices by the product of second matrices the elements of which are 1, -1 or 0 in value.

2. ADCT device **characterized by** comprising: a signal input portion for inputting an N point input signal; a signal selection portion for selecting a group of input signal among the N point signals, which group corresponds to one or more of a plurality of first matrices, or to the first matrix and a plurality of second matrices, wherein the first and the second matrices are obtained with respect of each of the sub-matrices defined in claim 1 by performing the first to the third steps defined in claim 1; an addition/subtraction portion for performing addition and subtraction operations for expanding the product of the first matrix and the plurality of the second matrices, or the product of the plurality of the first matrices with respect to the group of the input signals, which group depends on each of the sub-matrices and is selected in the signal section portion; a signal output portion for retrieving, as N point one-dimensional DCT data, an input signal of addition/subtraction operation in the addtion/subtraction portion; a transposition portion for transposing a group of one-dimensional DCT data comprised of the N point one-dimensional DCT data at an N point, wherein the N point one-dimensional DCT data is subsequently supplied from the signal output portion; whereby the group of one-dimensional DCT data is supplied from the transposition portion to the signal input portion with respect to each of the N point one-dimensional data to make it possible to retrieve a DCT coefficient data from the signal output portion, which coefficient data is an N point data resulted from both selection in the signal section portion and addition/subtraction in the addition/subtraction portion with respect to each of the N point one-dimensional data.

FIG. 1

IMAGE SIGNAL →

SIGNAL INPUT
PORTION 1

DCT OPERATION
PORTION 2

SIGNAL
SELECTION
PORTION 3

ADDITION/
SUBTRACTION
PORTION 4

SIGNAL
OUTPUT
PORTION 5

→ DCT
COEFFICIENT

TRANSPOSITION
PORTION 6

FIG. 2

$$\begin{vmatrix} a_{00} & a_{10} & \cdots & a_{70} \\ a_{00} & \cdot & & \cdot \\ \vdots & & \ddots & \vdots \\ a_{07} & \cdot & \cdots & a_{77} \end{vmatrix} \Rightarrow \begin{vmatrix} \begin{matrix} b_{00} & \cdots & b_{30} \\ \vdots & \ddots & \vdots \\ b_{03} & \cdots & b_{33} \end{matrix} & 0 \\ 0 & \begin{matrix} b_{44} & \cdots & b_{74} \\ \vdots & \ddots & \vdots \\ b_{47} & \cdots & b_{77} \end{matrix} \end{vmatrix} \Rightarrow \begin{vmatrix} \begin{matrix} c_{00} & c_{10} \\ c_{01} & c_{11} \end{matrix} + \begin{matrix} 0 \\ \end{matrix} & 0 \\ 0 & \begin{matrix} c_{22} & c_{32} \\ c_{23} & c_{33} \end{matrix} & \\ 0 & \begin{matrix} c_{44} & \cdots & c_{74} \\ \vdots & \ddots & \vdots \\ c_{47} & \cdots & c_{77} \end{matrix} \end{vmatrix}$$

# FIG. 3

$$\begin{vmatrix} C_{44} & \cdots & C_{74} \\ \vdots & \ddots & \vdots \\ C_{47} & \cdots & C_{77} \end{vmatrix} = \begin{vmatrix} 1 & 0 & 0 & 0 \\ 0 & 0 & 0 & 1 \\ 0 & 1 & 0 & 0 \\ 0 & 0 & 1 & 0 \end{vmatrix} \begin{vmatrix} d_{00} & d_{00} & & \\ d_{01} & d_{11} & & 0 \\ \hline & 0 & d_{22} & d_{32} \\ & & d_{23} & d_{33} \end{vmatrix} \begin{vmatrix} 1 & 0 & 0 & 1 \\ 0 & 1 & 1 & 0 \\ 0 & 1 & -1 & 0 \\ 1 & 0 & 0 & -1 \end{vmatrix}$$

# FIG. 4

$$\begin{vmatrix} d_{00} & d_{10} \\ d_{01} & d_{11} \end{vmatrix} = \begin{vmatrix} e_{00} & e_{10} \\ e_{01} & e_{11} \end{vmatrix} \begin{vmatrix} f_{00} & f_{10} \\ f_{01} & f_{11} \end{vmatrix}$$

# PATENT COOPERATION TREATY

**PCT**

| To: ATTORNEY   Haruo SAITOH<br>8ᵗʰ Floor, Yayoi Building 11-6,<br>Kyobashi 2-chome Chuo-ku,<br>Tokyo, Japan | NOTIFICATION OF TRANSMITTAL of<br>THE INTERNATIONAL SEARCH REPORT<br>OR THE   DECLARATION<br>(PCT   Rule  44.1) |
|---|---|
| | Date of mailing<br>23. 04. 02 |
| Applicant's or agent's file reference<br>TECHNO/002 | For further action<br>see paragraphs 1 and 4   below |
| International application No.<br>PCT/JO02/02663 | International filing date<br>20. 03. 02 |
| Applicant<br>TECHNO MATHEMATICAL CO., LTD. | |

1.☒ The applicant is hereby notified that the international search report has been established and is transmitted herewith .
Filing of amendments and statement under Article 19:
The applicant is entitled, if he so wishes, to amend the claims of the international application(see Rule 46):
When?   The time limit for filing such amendments is normally 2 months from the date of transmittal of the
international search report, however, for more details, see the notes on the accompanying sheet
Where?   Directly to the International Bureau of WIPO
34, chemin des Colombettes
1211 Geneva 20, Switzerland
Facsimile No.: (41-22)740.14.35
For more detailed instructions, see the notes on the accompanying sheet

2.☐ The applicant is hereby notified that no international search report will be established and that the declaration under
Article 17(2)(a)to that effect is transmitted herewith.

3 ☐   With regard to the protest against payment of (an) additional fee(s) under Rule 40.2,the applicant is notified that
☐   the protest together with the decision thereon has been transmitted to the International Bureau together
with the applicant's request to forward the texts of both the protest and the decision thereon to the
designated Offices.
☐   no decision has been made yet on the protest; the applicant will be notified   as soon as a decision is
made.

4. Further action(s): The applicant is reminded of the following:
Shortly after 18 months from the priority date, the international applicant will be published by the International Bureau.
If the applicant wishes to avoid or postpone publication, a notice of withdrawal of the international
application, or of the priority claim,   must reach the International Bureau as provided in rule 90 *bis* 1 and 90 *bis* 3,
respectively, before the Completion of the technical preparations for international publication.
Within 19 months from the priority date, a demand for international preliminary examination must be filed if the applicant
wishes to postpone the entry into the national phase until 30 months from the priority date(in some Offices even
later).
Within 20 months from the priority date, the applicant must perform the prescribed acts for entry into the national phase
before all designated Offices which have not been elected in the demand or in a later election within 19 months from
the priority date or could not be elected because they are not bound by Chapter II.

| Name and   mailing address of the ISA/JP<br>Japanese Patent office<br>No.4-3, Kasumigaseki 3-chome,<br>Tokyo, 100-8915, JAPAN | Authorized officer<br><br>the Commissioner of the patent office<br><br>Telephone No. 03 ( 3581) - 1101   ex |
|---|---|

PATENT COOPERATION TREATY

# P C T

INTERNATIONAL SEARCH REPORT

(PCT Article 18 and Rules 43 and 44)

| Applicant's or agent's file reference TECHNO/002 | FOR FURTHER ACTION | see Notification of Transmittal of International Search Report (From PCT/ISA/220) as well as, where applicable, item 5 below. | |
|---|---|---|---|
| International application No. PCT/JO02/02663 | International filing date 20. 03. 02 | (Earliest) priority Date | 11. 07. 01 |
| Applicant TECHNO MATHEMATICAL CO., LTD. | | | |

This international search report has been prepared by this International Searching Authority and is transmitted to the applicant according to Article 18. A copy is being transmitted to the International Bureau.

This international search report consists of a total of ___4___ sheets,

☐ It is also accompanied by a copy of each prior art document cited in this report.

1. Basis of the international Search report
   a. (Translation omission)
   b. (Translation omission)

2. ☒ Certain claims were found unsearchable (See BOX I ).

3. ☐ Unity of invention is lacking (See Box II ).

4. With regard to the title, ☒ the text is approved as submitted by the applicant.
   ☐ the text has been established by this Authority to read as follows:

5. With regard to the abstract,
   ☒ the text is approved as submitted by the applicant.
   ☐ the text has been established, according to Rule 38.2 (b), by this Authority as it appears in Box III. The applicant may, within one month from the date of mailing of this international search report, submit comments to this Authority.

6. The figure of the drawings to be published with the abstract is:
   Figure No. 1 ☒ as suggested by the applicant.                    ☐ None of the figures.
   ☐ because the applicant failed to suggest a figure.
   ☐ because this figure better characterizes the invention.

11

## INTERNATIONAL SEARCH REPORT

| International application No. |
|---|
| PCT/JP02/02663 |

**A. CLASSIFICATION OF SUBJECT MATTER**
Int.Cl⁷ G06F17/14

According to International Patent Classification (IPC) or to both national classification and IPC

**B. FIELDS SEARCHED**

Minimum documentation searched (classification system followed by classification symbols)
Int.Cl⁷ G06F17/00-17/18

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP 557204 A2 (Sony Corp.), 25 August, 1993 (25.08.93), Full text; all drawings & JP 5-300026 A Full text; all drawings & US 5410500 A | 2 |
| X | JP 3-186969 A (Sony Corp.), 14 August, 1991 (14.08.91), Full text; all drawings (Family: none) | 2 |
| X | EP 589737 A2 (Sony Corp.), 30 March, 1994 (30.03.94), Full text; all drawings & JP 6-243160 A Full text; all drawings & US 5420811 A | 2 |

☒ Further documents are listed in the continuation of Box C.    ☐ See patent family annex.

| | |
|---|---|
| *     Special categories of cited documents: | "T"   later document published after the international filing date or |
| "A"   document defining the general state of the art which is not considered to be of particular relevance | priority date and not in conflict with the application but cited to understand the principle or theory underlying the invention |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 11 April, 2002 (11.04.02) | 23 April, 2002 (23.04.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP02/02663 |

| C (Continuation). DOCUMENTS CONSIDERED TO BE RELEVANT | | |
| --- | --- | --- |
| Category* | Citation of document, with indication, where appropriate, of the relevant passages | Relevant to claim No. |
| A | JP 5-40776 A (Fujitsu Ltd.),<br>19 February, 1993 (19.02.93),<br>Drawings; Fig. 1<br>(Family: none) | 2 |

Form PCT/ISA/210 (continuation of second sheet) (July 1998)

13

# INTERNATIONAL SEARCH REPORT

| International application No. |
| --- |
| PCT/JP02/02663 |

---

**Box I    Observations where certain claims were found unsearchable (Continuation of item 1 of first sheet)**

This international search report has not been established in respect of certain claims under Article 17(2)(a) for the following reasons:

1. [X] Claims Nos.: 1

   because they relate to subject matter not required to be searched by this Authority, namely:
   The invention of claim 1 relates to merely a mathematical operation, and therefore the international application relates to a subject matter which the International Searching Authority is not required to search under PCT Article 17(2)(a)(i) and Rule 39.1(i).

2. [ ] Claims Nos.:

   because they relate to parts of the international application that do not comply with the prescribed requirements to such an extent that no meaningful international search can be carried out, specifically:

3. [ ] Claims Nos.:

   because they are dependent claims and are not drafted in accordance with the second and third sentences of Rule 6.4(a).

---

**Box II    Observations where unity of invention is lacking (Continuation of item 2 of first sheet)**

This International Searching Authority found multiple inventions in this international application, as follows:

1. [ ] As all required additional search fees were timely paid by the applicant, this international search report covers all searchable claims.

2. [ ] As all searchable claims could be searched without effort justifying an additional fee, this Authority did not invite payment of any additional fee.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ]    The additional search fees were accompanied by the applicant's protest.

[ ]    No protest accompanied the payment of additional search fees.

Form PCT/ISA/210 (continuation of first sheet (1)) (July 1998)